# EUROPÄISCHE PATENTSCHRIFT

(11) **EP 0 701 884 B1**
(45) Veröffentlichungstag und Bekanntmachung des Hinweises auf die Patenterteilung: **01.12.1999**
(21) Anmeldenummer: 95114282.7
(22) Anmeldetag: 12.09.1995
(51) Int. Cl.: B25J 9/02, B25J 9/10

(54) **Industrieroboter**
Industrial robot
Robot industriel

(30) Priorität: 13.09.1994 DE 9414820 U
(43) Veröffentlichungstag der Anmeldung: 20.03.1996
(73) Patentinhaber: Eissfeller, Roman, 78194 Immendingen (DE)
(72) Erfinder: Eissfeller, Roman, 78194 Immendingen (DE)
(74) Vertreter: Patentanwälte Westphal, Mussgnug & Partner

(56) Entgegenhaltungen:
- DE-A- 2 225 476
- DE-A- 2 624 378
- DE-A- 2 930 389
- FR-A- 2 070 719
- FR-A- 2 158 558
- FR-A- 2 682 909
- US-A- 3 665 148
- US-A- 4 637 761

## Beschreibung

Die Erfindung betrifft einen Industrieroboter mit den Merkmalen des Oberbegriffs des Anspruchs 1.

Ein solcher Industrieroboter ist beispielsweise in DE-A-26 24 378 beschrieben. Bei diesem Industrieroboter kann mit einem sog. "Einlernprozeß" die Bewegungsbahn des Arbeitsarmes der zuvor programmierten Bewegungsbahn folgen und somit eine automatisierte Bearbeitung des Werkstückes, das von einem Arbeitsarm gehalten wird, durchgeführt werden.

Problematisch bei diesem bekannten Industrieroboter ist die Tatsache, daß ein komplizierter Bewegungsmechanismus notwendig ist, um den Arbeitsarm zu bewegen. Der Bewegungsmechanismus sieht eine Vielzahl von miteinander verbundenen Drehachsen vor, die selbst bei einfachen linearen Bewegungen des Arbeitsarmes allesamt zueinander abgestimmt bewegt werden müssen. Problematisch ist auch das verhältnismäßig umständliche Abkoppeln der Antriebseinrichtungen, um ein leichtgängiges Programmieren des Bewegungsablaufes des Arbeitsarmes zu ermöglichen. So wird beschrieben, daß die in dem Bewegungsmechanismus angeordneten Friktions- oder Schlupfkupplungen mittels eines Momentschlüssels für Schlupf mit einer optimalen Drehreibung während der manuellen Führung der Manipulatorarme eingestellt werden. Diese Methode ist umständlich und sicherlich in der Praxis bei vielen verschiedenen Einlernvorgängen nicht akzeptabel.

Der vorliegenden Erfindung liegt die Aufgabe zugrunde, einen einfacher zu handhabenden Industrieroboter vorzusehen. Der aufzufindende Industrieroboter soll sich durch eine sehr einfache Programmierbarkeit und eine einfache Bedienbarkeit auszeichnen.

Diese Aufgabe wird durch einen Industrieroboter mit den Merkmalen des Anspruchs 1 gelöst.

Weiterbildungen der Erfindung sind Gegenstand der Unteransprüche.

Die Erfindung beruht u. a. darauf, daß der Mechanismus zur Bewegung des Arbeitsarmes des Industrieroboters mindestens drei Linearbewegungseinrichtungen aufweist. Durch eine erste Linearbewegungseinrichtung ist der Arbeitsarm in X-Richtung, durch eine zweite Linearbewegungseinrichtung in Y-Richtung und durch eine dritte Linearbewegungseinrichtung in Z-Richtung linear bewegbar, wobei die X-, Y- und Z-Richtungen zueinander orthogonal ausgerichtet sind. Durch das Vorsehen dreier solcher Linearbewegungseinrichtungen ist es in einfachster Weise möglich, den Arbeitsarm zu einer vorgegebenen Position zu führen. Die Linearbewegungseinrichtungen können hierbei, je nach anzufahrendem Punkt, völlig unabhängig voneinander in ihre Bewegungsrichtungen bewegt werden. Muß der Arbeitsarm beispielsweise lediglich in X-Richtung seitwärts bewegt werden, ist es erfindungsgemäß nur nötig, die erste Linearbewegungseinrichtung zu betätigen. Bei den bisher bekannten Industrierobotern mit Drehachsen war es dagegen notwendig, alle Drehachsen abgestimmt zueinander zu bewegen, um eine Seitwärtsbewegung des Arbeitsarmes in X-Richtung durchzuführen.

In einer Weiterbildung der Erfindung weist der Industrieroboter mindestens eine weitere Bewegungseinrichtung auf, um den Arbeitsarm selbst zu drehen oder zu schwenken.

Die ersten und zweiten Linearbewegungseinrichtungen bestehen vorzugsweise aus Führungsschienen, auf welchen eine Haltevorrichtung in X-Richtung bzw. Y-Richtung verschiebbar angeordnet ist. Angetrieben werden diese beiden Linearbewegungseinrichtungen vorzugsweise über einen endlos gespannten Zahnriemen. Bei größeren Anlagen kann auch ein Spindelantrieb vorgesehen werden.

Die dritte Linearbewegungseinrichtung zur Höhenverstellung des Arbeitsarmes besteht erfindungsgemäß aus einer Scherenhebeeinrichtung. Im einfachsten Fall kann diese Scherenhebeeinrichtung aus einer einzelnen Scherengabel bestehen. Bei der Handhabung von größeren Lasten hat es sich jedoch als zweckmäßig erwiesen, zwei solcher Scherenhebel nebeneinander anzuordnen und auf ihrer oberen Seite eine Arbeitsplatte zu befestigen. Mindestens einer der Scherenschenkel, vorzugsweise sämtliche Scherenschenkel der vorgesehenen Scherenhebeeinrichtung, sind an ihrem unteren Ende mit einer Antriebseinrichtung verbunden, mit welcher die Scherenhebel in X-Richtung verschoben und damit die Höhe der auf der Scherenhebeeinrichtung befindlichen Arbeitsplatte variiert werden kann. Erfindungsgemäß ist an den unteren Enden jeder der Scherenschenkel eine Federeinrichtung zur Lasteinstellung angeschlossen. Darüber hinaus ist eine weitere Federeinrichtung zur Endlagengrundeinstellung vorgesehen.

Erfindungsgemäß ist an jeder der Bewegungs- bzw. Linearbewegungseinrichtungen des Industrieroboters eine Sensoreinrichtung, z.B. ein Drehgeber, gekoppelt. Diese mit der Steuereinrichtung gekoppelten Sensoreinrichtungen dienen zur Bewegungserfassung der jeweiligen Bewegungs- bzw. Linearbewegungseinrichtungen und damit auch zur Positionserfassung des Arbeitsarmes.

Gemäß der Erfindung ist jede der Bewegungs- bzw. Linearbewegungseinrichtungen über eine Kupplungseinrichtung mit einer Antriebseinrichtung verbunden. Abhängig vom Betätigen einer vorzusehenden Schalteinrichtung sind die Bewegungs- bzw. Linearbewegungseinrichtungen gemeinsam an die entsprechende Antriebseinrichtung koppelbar oder von diesen entkoppelbar.

Im abgekoppelten Zustand befinden sich erfindungsgemäß sämtliche Linearbewegungseinrichtungen und Bewegungseinrichtungen in einem Gleichgewicht, d.h. sie können von Hand ohne größeren Kraftaufwand bewegt werden. Dies wird zusammen mit den vorgesehenen Sensoreinrichtungen zur Programmierung der Steuereinrichtung ausgenutzt.

Sind nämlich sämtliche Antriebseinrichtungen von den zugehörigen Bewegungs- bzw. Linearbewegungseinrichtungen abgekoppelt, so kann der Arbeitsarm bzw. der am Arbeitsarm befestigte Arbeitskopf manuell ohne großen Kraftaufwand bewegt werden. Diese Bewegungen werden erfindungsgemäß über die Sensoreinrichtung erfaßt und der Steuereinrichtung über geeignete Datenleitungen mitgeteilt. Durch das manuelle Bewegen des Arbeitsarmes bzw. Arbeitskopfes kann so in einfacher Weise der Steuerungseinrichtung ein anschließend automatisch ablaufender Arbeitsgang mitgeteilt werden. Nach Beenden einer solchen Programmeingabe werden die Bewegungs-bzw. Linearbewegungseinrichtungen wieder mit den zugehörigen Antriebsvorrichtungen gekoppelt. Dies kann durch Betätigen einer vorgesehenen Schalteinrichtung, z.B. einer Taste, erfolgen. Anschließend kann das Programm gestartet werden. Nach dem Programmstart führt der Arbeitsarm bzw. der Arbeitskopf selbsttätig und durch die Steuereinrichtung gesteuert die zuvor manuell ausgeführten Bewegungen durch. Ein sehr einfaches Programmieren des erfindungsgemäßen Industrieroboters ist die Folge.

Um eine möglichst leichtgängige Konstruktion des Industrieroboters zu gewährleisten, ist dieser in Lichtbauweise, insbesondere aus gekanteten Stahl- und/oder Aluminiumblechen, aufgebaut.

Falls notwendig, kann der gesamte Industrieroboter zusätzlich noch auf einem Drehteller angeordnet werden. Dies ermöglicht, den Industrieroboter um seine eigene Achse zu drehen. Der Drehteller kann über einen geeigneten Motor, z.B. einen Schritt-, Gleichstrom- oder Wechselstrommotor, eine Pneumatikkugelkupplung und eine Kette angetrieben werden. Der Schwenkbereich liegt vorzugsweisweise bei 360°.

Die Erfindung und deren Vorteile wird nachfolgend im Zusammenhang mit zwei Figuren näher erläutert. Es zeigen :
- Figur 1: eine Draufsicht auf ein Ausführungsbeispiel eines erfindungsgemäßen Industrieroboters,
- Figur 2: eine Seitenansicht des in Figur 1 dargestellten Industrieroboters und
- Figur 3: eine schematische Explosionsdarstellung eines Industrieroboters nach der Erfindung.

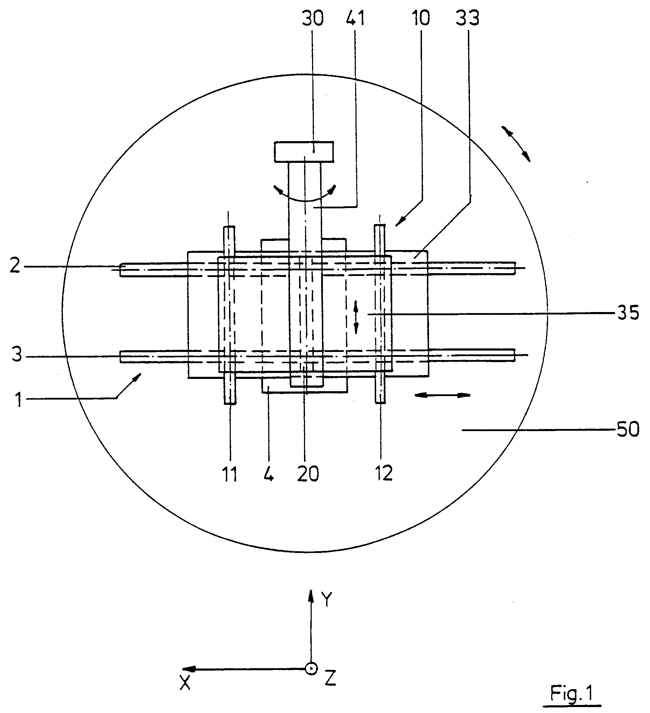

In Figur 1 ist die Draufsicht auf ein Ausführungsbeispiel eines Industrieroboters nach der Erfindung dargestellt. Der Industrieroboter verfügt über einen Drehteller 50, auf welchem ein Mechanismus zum Bewegen eines Arbeitsarmes 30 sitzt. Der Mechanismus verfügt über drei Linearbewegungseinrichtungen 1, 10, 20, wobei die erste Linearbewegungseinrichtung 1 den Arbeitsarm 30 linear in X-Richtung, die zweite Linearbewegungseinrichtung 10 den Arbeitsarm 30 linear in Y-Richtung und die dritte Linearbewegungseinrichtung 20 den Arbeitsarm 30 linear in Z-Richtung bewegt. Die X-, Y- und Z-Richtungen sind zueinander orthogonal ausgerichtet und weisen in Figur 1 die anhand des Koordinatenkreuzes angegebenen Ausrichtungen auf. Die X-Richtung läuft in der Darstellung von Figur 1 in der Zeichenebene von links nach rechts, die X-Richtung in der Zeichenebene von oben nach unten und die Z-Richtung aus der Ebene heraus in Richtung Betrachter.

Neben den drei Linearbewegungseinrichtungen 1, 10 und 20 verfügt der Industrieroboter in Figur 1 der besseren Übersichtlichkeit wegen über nicht dargestellte Antriebseinrichtungen zum Bewegen der Linearbewegungseinrichtungen, über eine Steuereinrichtung für die jeweiligen Antriebseinrichtungen sowie über eine Meßeinrichtung zum Erfassen der Position des Arbeitsarmes 30.

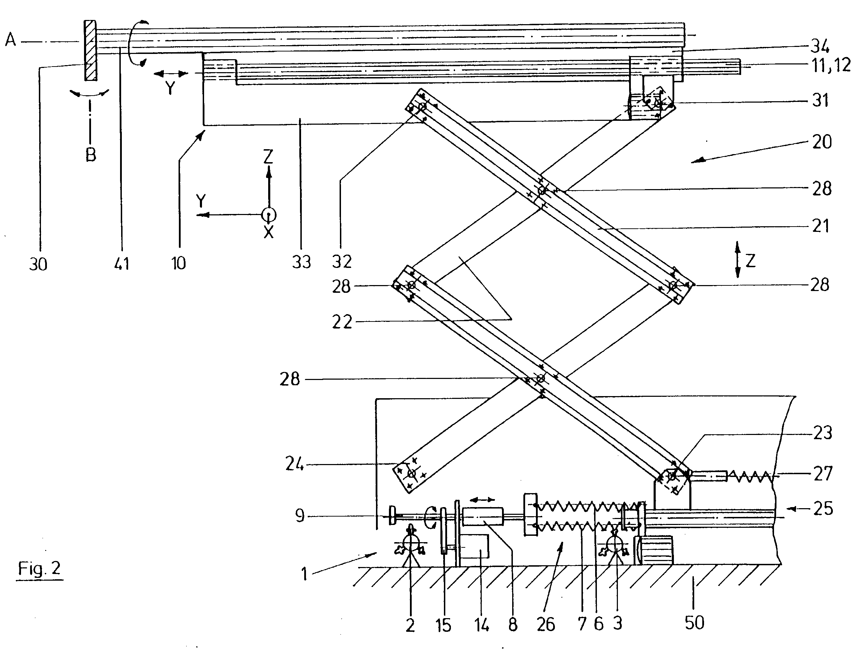

Der Aufbau des in Draufsicht in Figur 1 dargestellten Industrieroboters wird im Zusammenhang mit der Seitenansicht von Figur 2 deutlich.

Auf der Grundplatte, die der besagte Drehteller 50 sein kann, sind in X-Richtung zwei parallel zueinander verlaufende Führungsschienen 2, 3 angeordnet. Auf diesen Führungsschienen 2, 3 sitzt verschiebbar in X-Richtung eine Halteeinrichtung 4, z.B. eine Platte, auf. Diese Halteeinrichtung 4 sitzt vorzugsweise kugelgelagert auf den beiden Führungsschienen 2, 3. Der Antrieb der Halteeinrichtung 4 auf diesen beiden Führungsschienen 2, 3 erfolgt vorzugsweise über einen Schrittmotor, kann jedoch auch ein geeigneter Handkurbelantrieb sein. Bei größeren Anlagen kann auch ein Gleichstrom- oder Wechselstrommotor eingesetzt werden. Die lineare Bewegung auf den beiden Führungsschienen 2, 3 entlang der X-Achse erfolgt jedoch vorzugsweise über einen Zahnriemenantrieb. Als Fahrweg kann beispielsweise eine Strecke von 2 m vorgesehen werden. Für längere Fahrwege kann auch eine Spindel oder eine Zahnstange in an sich bekannter Weise eingesetzt werden. Erfindungsgemäß ist die bisher beschriebene Linearbewegungseinrichtung 1 in X-Richtung von der zugehörigen Antriebseinrichtung abkuppelbar. Hierfür ist eine nicht dargestellte pneumatische Kupplung vorgesehen, die den Zahnriemen, die Spindel oder die Zahnstange vom Motor und vom Getriebe löst. Der Achskörper, auf dem sich die Führungsschienen 2, 3 befinden, besteht vorzugsweise aus gekanteten Stahl- und/oder Aluminiumblechen.

Auf der Halteeinrichtung 4 der ersten Linearbewegungseinrichtung 1 ist eine zweite Linearbewegungseinrichtung zum Bewegen des Arbeitsarmes 30 in Y-Richtung und eine dritte Linearbewegungseinrichtung 20 zum Bewegen des Arbeitsarmes 30 in Z-Richtung und damit zur Höhenverstellung angeordnet. Die dritte Linearbewegungseinrichtung 20 ist im Ausführungsbeispiel der Figuren 1 und 2 als Scherenhebeeinrichtung ausgebildet. Die Scherenhebeeinrichtung 20 verfügt über zwei Scherenschenkel 21, 22, die an Gelenken 28 miteinander verbunden sind. Im Ausführungsbeispiel von Figur 2 sind vier solcher Gelenke 28 vorgesehen. Die unteren Enden 23, 24 der Scherenschenkel 21, 22 sind mit einer Antriebseinrichtung 25 gekoppelt, um den Scherenwinkel und damit die an den oberen Enden 31, 32 der Scherenschenkel 21, 22 angebrachten weiteren Platte 35 in der Höhe zu verstellen. Die Antriebseinrichtung 25 verschiebt hierzu die unteren Enden 23, 24 der Scherenhebeeinrichtung 20 in Y-Richtung.

Obwohl grundsätzlich eine Einfachscherenhebeeinrichtung und damit eine einzelne Schere ausreicht, um die Platte 33 höhenzuverstellen, hat es sich inbesondere bei vom Arbeitsarm zu tragenden schweren Lasten als vorteilhaft erwiesen, zwei oder mehrere Scherenhebel parallel zueinander anzuordnen. Hierdurch wird die mechanische Stabilität des Industrieroboters erhöht.

Auf der Platte 33 sitzt die bereits erwähnte zweite Linearbewegungseinrichtung 10, um den Arbeitsarm 30 in Y-Richtung linear zu bewegen. Im einfachsten Fall besteht diese zweite Linearbewegungseinrichtung wieder aus zwei zueinander parallel verlaufenden Führungsschienen 11, 12, welche in Y-Richtung ausgerichtet sind. Diese Führungsschienen 11, 12 sitzen auf der Platte 33, die mit den oberen Enden 31, 32 der Schenkelhebeeinrichtung 20 verbunden ist, auf. Auf den beiden Führungsschienen 11, 12 sitzt eine weitere Halteeinrichtung 34, vorzugsweise kugelgelagert, geführt in Y-Richtung. Auf dieser weiteren Halteeinrichtung 34 sitzt im Ausführungsbeispiel der Figuren 1 und 2 ein Rohr 41, an dessen vorderem Ende der Arbeitsarm 30 montiert ist.

Es ist anzumerken, daß die dritte Linearbewegungseinrichtung 20 und damit die Scherenhebeeinrichtung ebenfalls aus gekanteten und versteiften Blechen ausgebildet sein kann. Die dritte Linearbewegungseinrichtung 20 ist vorzugsweise auf den Führungsschienen 2 und 3 kugelgelagert. Der Antrieb kann durch einen Schritt-, Wechselstrom- oder Gleichstrommotor und zugehörigem Getriebe erfolgen. Das Höhenverstellen erfolgt bei der dritten Linearbewegungseinrichtung 20 vorzugsweise mittels eines Kettenantriebes bei kleinen und über eine Spindel bei größeren Anlagen. Die Auskopplung von Motor und Getriebe erfolgt vorzugsweise über eine Pneumatikkupplung, durch welche der vorgesehene Zahnriemen oder die Spindel gelöst werden kann. Die Kraftaufhebung erfolgt über Federkraft kombiniert mit einer einstellbaren Pneumatik, was weiter unten noch verdeutlicht wird.

Mit den bisher beschriebenen ersten, zweiten und dritten Lineareinrichtungen 1, 10 und 20 ist der Arbeitsarm 30 in X-, Y- und Z-Richtung linear verschiebbar und zwar durch voneinander unabhängige Bewegungen der drei Linearbewegungseinrichtungen 1, 10 und 20. Eine einfache Antriebseinrichtung für jede dieser drei Linearbewegungseinrichtungen 1, 10 und 20 und demzufolge eine einfache Programmierbarkeit ist somit gewährleistet.

Um den Arbeitsarm 30 und den daran befindlichen, der Einfachheit halber nicht dargestellten Arbeitskopf auch in gewünschter Weise verdrehen oder schwenken zu können, ist das Rohr 41 vorzugsweise um ± 100° um seine Achse verdrehbar. Das Rohr ist vorzugsweise kugelgelagert in einem gekanteten Blechgehäuse aufgenommen. Der Drehantrieb für das Rohr 41 erfolgt vorzugsweise wieder über einen Zahnriemen und zwar bei kleinen Anlagen ohne Kupplung. Bei größeren Anlagen wird zweckmäßigerweise eine Pneumatikkugelkupplung vorgesehen. Als Antrieb ist ein Schritt-, Wechselstrom- oder Gleichstrommotor geeignet. Ein Kräfteausgleich findet einstellbar über Federkraft in Verbindung mit Pneumatikzylindern statt.

Durch das vorgesehene drehbar gelagerte Rohr 41 ist folglich ein Verschwenken des Arbeitsarmes 30 um die Achse des Rohres 41 möglich.

Der Arbeitsarm 30 ist jedoch auch orthogonal zu dieser Drehachse verschwenkbar bzw. drehbar. Der Arbeitsarm 30 mit Arbeitskopf ist hierfür in einem T-Getriebe gelagert. Innerhalb des Rohres 41 erfolgt der Antrieb, so daß der Arbeitsarm vorzugsweise um ± 100° um die in Figur 2 mit B bezeichnete Achse verschwenkbar ist. Die Achse des Rohres 41 ist in Figur 2 dagegen mit A bezeichnet.

Der Industrieroboter sitzt auf einer Grundplatte auf, die vorzugsweise, jedoch nicht notwendigerweise, drehbar ist. Als günstig hat sich eine Drehplatte 50 erwiesen. Auf dieser Drehplatte 50 sind die Führungsschienen 2 und 3 der ersten Linearbewegungseinrichtung 1 angeordnet. Der Antrieb der Drehplatte 50 kann über einen Schritt-, Wechselstrom- oder Gleichstrommotor erfolgen, wobei eine Pneumatikkugelkupplung und ein Antriebsriemen, vorzugsweise in Form einer Kette, vorgesehen ist. Der Schwenkbereich der Drehplatte liegt vorzugsweise bei 360°.

Der Industrieroboter gemäß der Erfindung ist hinsichtlich seiner Konstruktion in Leichtbauweise hergestellt. D.h., daß vorzugsweise gekantete Bleche aus Stahl und/oder Aluminium zum Aufbau des Industrieroboters vorgesehen sind. Hierdurch erhält der Industrieroboter ein verhältnismäßig geringes Gewicht.

Dieses geringe Gewicht ist insbesondere für ein leichtgängiges Verstellen des Arbeitsarmes 30 vorteilhaft. Dieses leichtgängige Verstellen des Arbeitsarmes 30 wird auch zur Programmierung der Steuereinrichtung ausgenutzt. In einem sogenannten Teach-In-Prozeß wird der Steuereinrichtung die auszuführende Bewegung des Arbeitsarmes 30 gelernt. Hierfür werden zunächst sämtliche Bewegungs- und Linearbewegungseinrichtungen 1, 10, 20, 30 und 40 über eine Schalteinrichtung von den jeweiligen Antriebsvorrichtungen abgekoppelt. Aufgrund einer speziellen Federkonstruktion befindet sich der Arbeitsarm 30 in einem Schwebe- bzw. schwimmenden Zustand. In diesem Zustand kann der Arbeitsarm 30 besonders leichtgängig bewegt werden. Der Arbeitsarm 30 wird von einer Einstellperson entsprechend der auszuführenden Bewegung zunächst von Hand bewegt. Über geeignete Sensoreinrichtungen an den Bewegungs- und Linearbewegungseinrichtungen 1, 10, 20 und 40 werden diese Bewegungen erfaßt und der Steuereinrichtung mitgeteilt. In der Steuereinrichtung werden diese Bewegungen in einer Speichereinrichtung gespeichert. Abhängig von diesen gespeicherten Daten wird ein Bewegungsprogramm innerhalb der Steuereinrichtung erstellt, um anschließend selbsttätig die vorher gelernte Bewegung auszuführen. Nach Beendigung der Programmeingabe durch manuelle Bewegung des Arbeitsarmes 30 (Teach-In) werden die einzelnen Bewegungs- und Linearbewegungseinrichtungen 1, 10, 20 und 40 wieder mit den zugehörigen Antriebseinrichtungen über die Schalteinrichtung gekoppelt. Bei Programmstart führt der Arbeitsarm 30 die zuvor gelernte Bewegung selbsttätig durch.

Zur Erzielung einer leichtgängigen Bewegung des Arbeitsarmes 30 wird insbesondere für die dritte Linearbewegungseinrichtung 20 und damit die Scherenhebeeinrichtung ein besonderer Federungsmechanismus eingesetzt, um einmal eine Endlagengrundeinstellung der Scherenhebeeinrichtung zu gewährleisten und zum anderen abhängig von der vom Arbeitsarm 30 zu tragenden Last einen Lastausgleich einzustellen.

Obwohl dieser Federmechanismus an beiden unteren Enden 23, 24 der Scherenhebeeinrichtung 20 angebracht ist, ist in Figur 2 der Übersichtlichkeit wegen nur die am unteren Ende 23 des Scherenschenkels 22 angebrachte Federeinrichtung gezeigt. An das untere Ende 23 des Scherenschenkels 22 sind zwei Zugfedern 6, 7 angekoppelt. Die Zugfedern 6, 7 sind in Y-Richtung ausgerichtet. Über eine geeignete Einrichtung, hier einen Zylinder 8 und eine Verstellspindel 9, kann die Spannung der Zugfedern 6, 7 eingestellt werden. Durch die Zugfedern 6, 7 kann ein Gewichtsausgleich entsprechend der am Arbeitsarm 30 angebrachten Last erreicht werden. Um eine Voreinstellung der Federkraft zu ermöglichen, ist ein Motor 14 vorgesehen der über ein Zahnradgetriebe 15 mit der Spindel 9 in Wirkverbindung steht. Bei Betätigung des Motors 14 kann eine Höhengrundeinstellung und damit eine Voreinstellung der Federkraft der beiden Zugfedern 6, 7 vorgenommen werden.

Zur Endlagengrundeinstellung und damit zur Stabilisierung der Scherenschenkel 21, 22 ist jeder der beiden Scherenschenkel an seinem unteren Ende mit einer weiteren Federeinrichtung 27 verbunden. Bei nahezu zusammengeklappter Schere und damit niedrigen Höhen des Arbeitsarmes 30 drükken nämlich die Scherenschenkel 21, 22 bei starker Belastung des Arbeitsarmes 30 verstärkt in Y-Richtung. Um diesem Druck entgegenzuwirken, dient die Federeinrichtung 27, die jeweils eine Druckfeder vorsieht, die ebenfalls in Y-Richtung ausgerichtet und am unteren Ende jedes der beiden Scherenschenkel 21, 22 befestigt ist. In der Darstellung von Figur 2 ist die Druckfeder der Federeinrichtung 27 vom unteren Ende 23 des Scherenschenkels 22 in Y-Richtung nach rechts ausgerichtet, während die Zugfedern 6, 7 sich in entgegengesetzte Richtung erstrecken. Bei der nicht dargestellten Federeinrichtung für den Scherenschenkel 21 ist die Ausrichtung der Federachsen genau entgegengesetzt hierzu.

Der wesentliche Vorteil des Industrieroboters nach der Erfindung besteht im Vorsehen von drei Linearbewegungseinrichtungen und der schwimmenden Lagerung des Arbeitsarmes 30 bei ausgekoppelten Antrieben. Darüber hinaus ist der Industrieroboter nach der Erfindung in Leichtbauweise aufgebaut. Durch diese Maßnahmen ist es in einfachster Weise möglich, dem Industrieroboter den auszuführenden Bewegungsablauf zu lernen. Ein aufwendiges Programmieren mittels Mikrocomputer und/oder einer speziellen Maschinensprache ist nicht mehr notwendig.

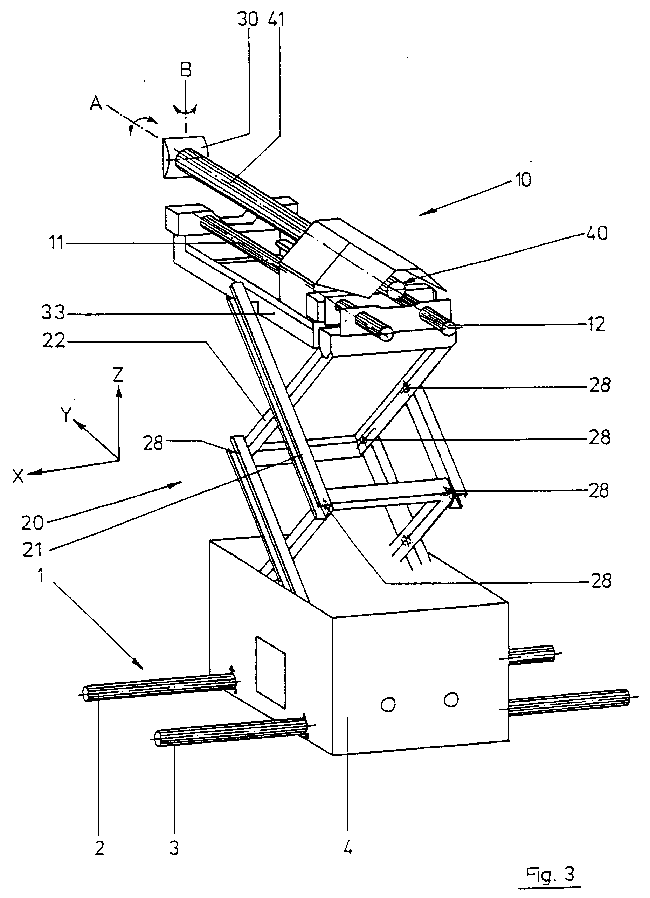

In Figur 3 ist der Industrieroboter nach der Erfindung beispielsweise in Explosionsdarstellung gezeigt. Gleiche Bezugszeichen stehen wieder für die bekannten Teile. Es ist jetzt deutlich die Zweifachscherenhebeeinrichtung 20 zu erkennen, auf welcher die Platte 3 mit der zweiten Linearbewegungseinrichtung 10 sitzt.

## Patentansprüche

1. Industrieroboter mit einem beweglichen Arbeitsarm zum Handhaben von Werkstücken und einen den Arbeitsarm bewegenden Mechanismus, einer Antriebseinrichtung zur dreidimensionalen Bewegung des Mechanismus, einer Steuereinrichtung für die Antriebseinrichtung sowie einer Messeinrichtung zum Erfassen der Position des Arbeitsarmes, wobei in einem Einlernprozess (teach-in-Prozess) bei abgekoppelter Antriebseinrichtung die auszuführende Bewegung des Arbeitsarmes in der Steuereinrichtung speicherbar ist zum anschließenden, selbsttätigen Bewegen des Arbeitsarmes nach Maßgabe der in der Steuereinrichtung gespeicherten Bewegungsbahn,
**gekennzeichnet** durch die weiteren Merkmale:
- der Mechanismus weist drei zueinander orthogonal ausgerichtete Linearbewegungseinrichtungen (1, 10, 20) auf,
- eine der Linearbewegungseinrichtungen (20) ist als Scherenhebeeinrichtung zur Höhenverstellung des Arbeitsarmes (30) in Z-Richtung ausgebildet,
- die Scherenhebeeinrichtung (20) weist an ihrem unteren Ende eine Federeinrichtung (26) zur Lasteinstellung und eine weitere Federeinrichtung (27) zur Endlagengrundeinstellung auf, und
- eine Schalteinrichtung, durch welche die drei Linearbewegungseinrichtungen (1, 10, 20) gemeinsam von den zugehörenden Antriebseinrichtungen entkoppelbar oder an diese koppelbar sind.

2. Industrieroboter nach Anspruch 1,
**dadurch gekennzeichnet,**
daß der Arbeitsarm (30) über eine vierte Bewegungseinrichtung (40) drehbar bzw. verschwenkbar ist.

3. Industrieroboter nach Anspruch 1 oder 2,
**dadurch gekennzeichnet,**
daß die erste Liniearbewegungseinrichtung (1) mindestens eine, vorzugsweise zwei Führungsschienen (2, 3) aufweist, auf welcher eine Haltevorrichtung (4) für die übrigen Linearbewegungseinrichtungen (10, 20, 40) in X-Richtung verschiebbar angeordnet ist.

4. Industrieroboter nach einem der Ansprüche 1 bis 3,
**dadurch gekennzeichnet,**
daß die zweite Linearbewegungseinrichtung (10) mindestens eine auf der dritten Linearbewegungseinrichtung (20) angeordnete und in Y-Richtung weisende Führungsschiene (11, 12) aufweist, über welche der Arbeitsarm (30) in Y-Richtung bewegbar ist.

5. Industrieroboter nach einem der Ansprüche 1 bis 4,
**dadurch gekennzeichnet,**
daß eine weitere Bewegungseinrichtung (40) zum Verdrehen und/oder Schwenken des Arbeitsarmes (30) vorgesehen ist.

6. Industrieroboter nach Anspruch 5,
**dadurch gekennzeichnet,**
daß die Scherenhebeeinrichtung (20) mindestens eine Schere mit zwei Scherenschenkeln (21, 22) aufweist, daß mindestens einer der Scherenschenkel (21, 22) an seinem unteren Ende (23, 24) mit einer Antriebseinrichtung (25) zum Heben oder Senken der Scherenhebeeinrichtung (20) durch Verschieben des Scherenhebels (21, 22) in X-Richtung gekoppelt ist.

7. Industrieroboter nach einem der Ansprüche 1 bis 6,
**dadurch gekennzeichnet,**
daß an jede der Bewegungs- bzw. Linearbewegungseinrichtungen (1, 10, 20, 40) eine Sensoreinrichtung zur Bewegungserfassung gekoppelt ist.

8. Industrieroboter nach einem der Ansprüche 1 bis 7,
**dadurch gekennzeichnet,**
daß die mechanische Konstruktion des Industrieroboters in Leichtbauweise, insbesondere mit gekanteten Stahl- und/oder Aluminiumblechen, aufgebaut ist.

9. Industrieroboter nach einem der Ansprüche 1 bis 8,
**dadurch gekennzeichnet,**
daß die Steuereinrichtung einen Datenspeicher zur Bewegungserfassung aufweist, in welchen manuell geführte Bewegungen des Arbeitsarmes (30) mittels der Sensoreinrichtungen bei abgekoppelten Antriebseinrichtungen einspeicherbar sind.

10. Industrieroboter nach einem der Ansprüche 1 bis 9,
**gekennzeichnet durch**
einen Drehteller (50), auf welchem der Industrieroboter aufsitzt.

## Claims

1. An industrial robot having a movable operating arm for handling workpieces and a mechanism moving the operating arm, a drive device for the three-dimensional movement of the mechanism, a control device for the drive device and also a measuring instrument for detecting the position of the operating arm, wherein in a teach-in process with the drive device uncoupled the movement of the operating arm to be performed can be memorised in the control device for the subsequent automatic movement of the operating arm in accordance with the path of movement memorised in the control mechanism,
**characterised by** the further features:
- the mechanism comprises three linear movement devices (1, 10, 20) orthogonally aligned with respect to one another,
- one of the linear movement devices (20) is constructed as a scissor-type jack for the vertical adjustment of the operating arm (30) in the z-direction,
- the scissor-type jack (20) comprises at its lower end a spring mechanism (26) for the load setting and a further spring mechanism (27) for the end of travel basic setting, and
- a switching device by which the three linear movement devices (1, 10, 20) can be jointly uncoupled from the associated drive devices or can be coupled thereto.

2. An industrial robot according to Claim 1,
**characterised in that** the operating arm (30) can be rotated and swivelled via a fourth movement device (40).

3. An industrial robot according to Claim 1 or 2,
**characterised in that** the first linear movement device (1) comprises at least one, preferably two guide rails (2, 3), on which a retention device (4) for the remaining linear movement devices (10, 20, 40) is displaceably disposed in the X-direction.

4. An industrial robot according to one of Claims 1 to 3,
**characterised in that** the second linear movement device (10) has at least one guide rail (11, 12) disposed on the third linear movement device (20) and pointing in the Y-direction, via which the operating arm (30) is movable in the Y-direction.

5. An industrial robot according to one of Claims 1 to 4,
**characterised in that** a further movement device (40) is provided to twist and/or swivel the operating arm (30).

6. An industrial robot according to Claim 5,
**characterised in that** the scissor-type jack (20) comprises at least one scissor unit with two scissor arms (21, 22), **in that** at least one of the scissor arms (21, 22) is coupled at its lower end (23, 24) to a drive device (25) for raising or lowering the scissor-type jack (20) by displacing the scissor lever (21, 22) in the x direction.

7. An industrial robot according to one of Claims 1 to 6,
**characterised in that** a sensor device for detecting movement is coupled to each of the movement and linear movement devices (1, 10, 20, 40).

8. An industrial robot according to one of Claims 1 to 7,
**characterised in that** the mechanical construction of the industrial robot is has a lightweight construction, in particular with edged steel and/or aluminium sheets.

9. An industrial robot according to one of Claims 1 to 8,
**characterised in that** the control device has a data memory for movement detection in which manually performed movements of the operating arm (30) can be stored by means of the sensor devices when the drive devices are uncoupled.

10. An industrial robot according to one of Claims 1 to 9,
**characterised by** a rotary table (50) on which the industrial robot sits.

## Revendications

1. Robot industriel comportant un bras manipulateur, mobile, pour manipuler des pièces et un mécanisme déplaçant le bras, une installation d'entraînement pour le déplacement tridimensionnel du mécanisme, une installation de commande pour l'installation d'entraînement ainsi qu'une installation de mesure pour détecter la position du bras manipulateur,
- dans un procédé d'apprentissage, l'installation d'entraînement étant débrayée, on met en mémoire le mouvement que doit exécuter le bras manipulateur dans l'installation de commande pour ensuite déplacer automatiquement le bras manipulateur selon la trajectoire mise en mémoire dans l'installation de commande,
caractérisé en ce que :
- le mécanisme présente trois installations de déplacement linéaire (1, 10, 20) alignées suivant des direction orthogonales,
- l'une des installations de déplacement linéaire (20) est un dispositif de levage à leviers croisés pour régler la hauteur du bras manipulateur (30) dans la direction de l'axe (Z),
- le dispositif de levage à leviers croisés (20) comporte, à son extrémité inférieure, un dispositif à ressort (26) pour régler la charge ainsi qu'un autre dispositif à ressort (27) pour régler la position de base de fin de course et
- une installation de commutation permet de coupler ou de découpler les trois installations de déplacement linéaire (1, 10, 20) globalement par rapport aux installations d'entraînement correspondantes.

2. Robot industriel selon la revendication 1,
caractérisé en ce que
le bras manipulateur (30) peut tourner ou pivoter par l'intermédiaire d'une quatrième installation de déplacement (40).

3. Robot industriel selon l'une des revendications 1 ou 2,
caractérisé en ce que
la première installation de déplacement linéaire (1) comporte au moins un et de préférence deux rails de guidage (2, 3) sur lesquels coulissent, dans la direction X, un dispositif de fixation (4) pour les autres installations de déplacement linéaire (10, 20, 40).

4. Robot industriel selon l'une des revendications 1 à 3,
caractérisé en ce que
la seconde installation de déplacement linéaire (10) comporte au moins un rail de guidage (11, 12) monté sur la troisième installation de déplacement linéaire (20) et dirigé dans la direction Y, permettant de déplacer le bras de manoeuvre (30) dans la direction Y.

5. Robot industriel selon l'une des revendications 1 à 4,
caractérisé par
une autre installation de déplacement (40) pour tourner et/ou pivoter le bras de manoeuvre (30).

6. Robot industriel selon la revendication 5,
caractérisé en ce que
le dispositif de levage à leviers croisés (20) comporte au moins une cisaille avec deux leviers (21, 22),
- au moins l'un des leviers (21, 22) est couplé à son extrémité inférieure (23, 24) à une installation d'entraînement (25) pour lever ou abaisser le dispositif de levage à leviers croisés (20) par déplacement du levier (21, 22) dans la direction X.

7. Robot industriel selon l'une des revendications 1 à 6,
caractérisé par
une installation de détection pour la saisie du mouvement couplé à chacune des installations de déplacement ou de déplacement linéaire (1, 10, 20, 40).

8. Robot industriel selon l'une des revendications 1 à 7,
caractérisé en ce que
la construction mécanique du robot industriel est réalisée en construction légère, notamment en tôle d'acier et/ou d'aluminium pliées.

9. Robot industriel selon l'une des revendications 1 à 8,
caractérisé en ce que
l'installation de commande comporte une mémoire de données pour la saisie du mouvement qui enregistre les mouvements à guidage manuel du bras manipulateur (30) à l'aide d'installation de détection lorsque les installations d'entraînement sont découplées.

10. Robot industriel selon l'une des revendications 1 à 9,
caractérisé par
un plateau tournant (50) portant le robot industriel.
